# EUROPÄISCHE PATENTSCHRIFT

(11) **EP 3 710 322 B1**
(45) Veröffentlichungstag und Bekanntmachung des Hinweises auf die Patenterteilung: **11.01.2023**
(21) Anmeldenummer: 18795315.3
(22) Anmeldetag: 15.10.2018
(51) Int. Cl.: B60T 11/16, B60T 11/26

(54) **HYDRAULISCHES AGGREGAT ZUM ERZEUGEN VON BREMSDRUCK FÜR EINE HYDRAULISCHE BREMSANLAGE**
HYDRAULIC APPARATUS FOR GENERATING BRAKE PRESSURE FOR A HYDRAULIC BRAKING SYSTEM
DISPOSITIF HYDRAULIQUE PERMETTANT DE GÉNÉRER UNE PRESSION DE FREIN POUR UN SYSTÈME DE FREINAGE HYDRAULIQUE

(30) Priorität: 14.11.2017 DE 102017220207
(43) Veröffentlichungstag der Anmeldung: 23.09.2020
(73) Patentinhaber: Continental Automotive Technologies GmbH, 30165 Hannover (DE)
(72) Erfinder: LOKE, Jörg, 65611 Brechen (DE); KRÄMER, Horst, 65462 Ginsheim-Gustavsburg (DE); RÜFFER, Manfred, 65843 Sulzbach (DE); BISCHOFF, Andreas, 60437 Frankfurt am Main (DE); GERBER, Sascha, 65307 Bad Schwalbach (DE); KNEWITZ, Ingo, 61267 Neu Anspach (DE)
(74) Vertreter: Continental Corporation
(86) Internationale Anmeldenummer: PCT/EP2018/078044
(87) Internationale Veröffentlichungsnummer: WO 2019/096513

(56) Entgegenhaltungen:
- WO-A2-2010/012439
- CN-A- 103 619 678
- US-A1- 2011 048 226
- Fachausschuss "Konstruieren in Guss": "VDG-Merkblatt "Gussteile für den Maschinenbau" K 200 Januar 2005", , 1. Januar 2016 (2016-01-01), Seiten 20-20, XP055550257, Berlin ISBN: 978-1-5407-3194-4 Gefunden im Internet: URL:https://www.bdguss.de/fileadmin/conten t_bdguss/Der_BDG/Richtlinien/K_200.pdf

## Beschreibung

Die Erfindung bezieht sich auf ein hydraulisches Aggregat zum Erzeugen von Bremsdruck , ein Verfahren zur Erzeugung einer Verbindungsbohrung in dem Gehäuse des Aggregats, zugehörige Halbzeuge und eine zugehörige Bremsanlage gemäß Oberbegriffen der unabhängigen Ansprüche.

Die Gehäuse derartiger Aggregate werden meistens aus Leichtmetalllegierungen hergestellt. Üblicherweise wird dabei zunächst mit Urformverfahren ein Gussrohling erzeugt - beispielsweise im Kokillengussverfahren. Ein derart erzeugter Gussrohling weist herstellbedingt zunächst vergleichsweise grobe Maß- und Oberflächentoleranzen und wird danach mit spanabhebenden Verfahren mit erforderlichen Funktionselementen wie diverse Anschlüssen, Verbindungskanäle, Bohrungen, Dichtflächen, Nuten und Dergleichen sowie gegebenenfalls anschließend mit einer Schutzschicht versehen.

Beispielsweise ist aus CN 103619678 A ein Hauptbremszylinder bekannt, bei dem eine schräge Verbindungsbohrung zwischen einer Behälteraufnahme und einer Kolbenbohrung unmittelbar in die umlaufende konische Fläche am Übergang zwischen Boden und Mantelfläche der Behälteraufnahme getrieben ist.

Derartige Verbindungsbohrungen sind eng toleriert und stellen oft derart hohe Anforderungen an die Herstellwerkzeuge und Prozesse, dass sie in mehreren Prozessschritten durchgeführt werden müssen. So ist es beispielsweise üblich, zunächst grob tolerierte Vorbohrungen - sogenannte Pilotbohrungen - zu erzeugen, um eine optimale Anlagefläche für Bohrwerkzeuge zum Erzeugen von eng tolerierten Funktionsbohrungen anzubieten. Die damit einhergehenden Werkzeugwechsel, verbunden mit langen Verweilzeiten in den Werkzeugmagazinen, erhöhen die Herstellkosten.

Naheliegende Bestrebungen nach Einsparung von Gewicht und Außenmaß verstärken die Präzisionsanforderungen sowie Herstellaufwand und Herstellkosten zusätzlich.

Die Erfindung beruht somit auf der Aufgabe, ein verbessertes und insbesondere herstelltechnisch optimiertes hydraulisches Aggregat anzubieten.

Die Aufgabe wird erfindungsgemäß durch ein verbessertes Gehäuse - Gussrohlig mit der Merkmalskombination nach dem Hauptanspruch 1 gelöst. Unteransprüche zusammen mit Figurenbeschreibungen geben weitere vorteilhafte Ausführungen und Weiterbildungen der Erfindung an.

Die Erfindung sieht vor, dass der Gussrohling in der Aufnahmekavität wenigstens eine im Wesentlichen ebene Fläche aufweist, welche sich von dem Boden in die Mantelfläche erstreckt und deren Normalenvektor in einem schrägen Neigungswinkel zu der Steckachse gerichtet ist. Gemäß der vorteilhaften Weiterbildungen kann der Neigungswinkel in einem Bereich zwischen 30° und 60° liegen.

Durch eine derart gestaltete Gusskontur kann eine optimierte Anlagefläche für senkrechte Auflage des Bohrwerkzeugs realisiert werden, so dass die erforderliche Verbindungsbohrung unmittelbar direkt unter Einhaltung von engen Toleranzen gebohrt und auf eine zusätzliche Pilotbohrung verzichtet werden kann. Bearbeitungszeiten und Kosten werden durch die damit einhergehende Vermeidung von Werkzeugwechsel signifikant verringert.

Diese Anlagefläche wird beim nachfolgenden Zerspannen der Aufnahmekavität lediglich soweit abgetragen, dass die künftige Aufnahme des Anschlussstutzens des Fluidbehälters nicht behindert wird.

Um den Werkzeugfreigang zu gewährleisten sieht die Erfindung ebenso vor, dass die Bohrungsachse in einem Mindestabstand größer als ein Radius der Verbindungsbohrung zu einer inneren Mantelfläche der Aufnahmekavität verläuft. Für eine optimale, vergrößerte Einstecktiefe des Anschlussstutzens wird die ebene Fläche nach dem Bohren der Verbindungsbohrung beim nachfolgenden Zerspanen der Aufnahmekavität teilweise soweit abgetragen, dass Aufnahme des Anschlussstutzens des Fluidbehälters nicht behindert wird. Besonders vorteilhaft kann die Erfindung bei dem Gehäuse eines Tandem-Hauptbremszylinders angewandt werden, um eine die Kompaktheit fördernde große axiale Versetzung der Radialinnennut relativ zu der zugeordneten Aufnahmekavität zu realisieren.

Des Weiteren beansprucht die Erfindung eine hydraulische Kraftfahrzeugbremsanlage, die mit einem erfindungsgemäßen hydraulischen Aggregat ausgestattet ist.

Weitere Merkmale und Vorteile der Erfindung ergeben sich aus der nachfolgenden Beschreibung eines Ausführungsbeispiels und den Zeichnungen. Hierbei zeigen:
Fig.1 beispielhaft, nicht maßstäblich und stark vereinfacht das Gehäuse eines erfindungsgemäßen hydraulischen Aggregats als unbearbeiteter Gussrohling (Ansicht a) nachgearbeitet, mit angedeuteten weiteren Komponenten (Ansicht b) im Axialschnitt.
Fig.2 einen vergrößerten Ausschnitt des Gussrohlings einer erfindungsgemäßen Ausführungsform im Bereich der Aufnahmekavität in Axialschnitt (Ansicht a) und Draufsicht (Ansicht b).
Fig.3 ein spanend nachgearbeitetes Gehäuse der Ausführungsform gemäß Fig.2 in gleichen Ansichten.

### Fig.1

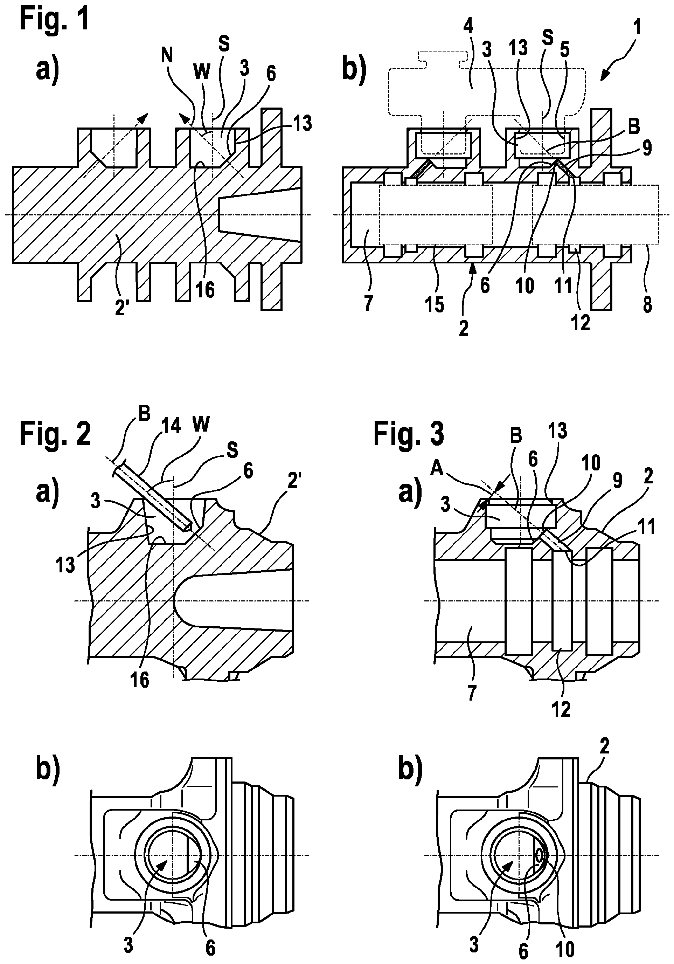

Fig.1 zeigt in der Ansicht b ein durch Zerspanen mit weiteren Funktionselementen versehenes Gehäuse 2 eines erfindungsgemäßen Aggregats 1 und in der Ansicht a seinen unbearbeiteten Gussrohling 2'. In der gezeigten Ausführungsform ist das hydraulische Aggregat 1 als ein Hauptbremszylinder mit in Tandembauweise hintereinander angeordneten Primärkolben 8 und Sekundärkolben 15 ausgeführt. Andere Ausführungsformen sind innerhalb der Erfindung ebenso zulässig.

Im Gehäuse 2 ist eine Kolbenbohrung 7 angeordnet, in der hier nur angedeutet dargestellten Primärkolben 8 und Sekundärkolben 15axial verschiebbar geführt sind. Die Mantelfläche der Kolbenbohrung ist mit mehreren Radialnuten versehen. Wenigstens eine Radialinnennut 12 dient dabei zur gleichmäßigen, den hier stellvertretend dargestellten Primärkolben 5 radial umschließend benetzenden Versorgung mit Bremsflüssigkeit aus einem Fluidbehälter 4. Zu diesem Zweck ist die Radialinnennut 12 über eine Verbindungsbohrung 9 mit der Aufnahmekavität 3 verbunden, in die ein mit dem Fluidbehälter 4 hydraulisch verbundener Anschlussstutzen 5 entlang einer Steckachse S gesteckt und mit einem hier nicht gezeigten, in Hinterschnitte der inneren Mantelfläche 13 der Aufnahmekavität 3 eingreifenden Dichtelement abgedichtet ist.

Am Gussrohling 2' ist die innere Mantelfläche 13 der Aufnahmekavität 3 zunächst im Wesentlichen zylinderförmig oder wegen der erforderlichen Entformungsschrägen kegelförmig vorgesehen. Vom Boden 16 der Aufnahmekavität 3 in ihre Mantelfläche 13 erstreckt sich eine im Wesentlichen ebene Fläche 6, deren Orthogonale beziehungsweise deren Normalenvektor N in einem Neigungswinkel W von etwa 45° zur der Steckachse S geneigt ist. Der Wert des Neigungswinkels W kann innerhalb der Erfindung je nach Ausgestaltung vom Gehäuse 2 grundsätzlich frei variieren, als ein technisch und wirtschaftlich besonders sinnvoll einsetzbarer Wertebereich erweist sich jedoch ein Bereich zwischen 30° und 60°.

### Fig.2 und 3

Die Fläche 6 dient zur optimierten Anlage einer Spitze des Bohrwerkzeugs 14, welches zum Bohren der Verbindungsbohrung 9 eingesetzt wird. Die Verbindungsbohrung 9 kann so unmittelbar in der Aufnahmekavität 3 des Gussrohlings 2' erzeugt werden, ohne dass die Mantelfläche 13 der Aufnahmekavität 3 zuvor in irgendeiner Weise zerspant, beispielsweise vorgebohrt werden muss. Der Neigungswinkel W der Fläche 6 ist dabei so gewählt, dass das Bohrwerkzeug 14 im senkrechten Winkel unmittelbar auf die Fläche 6 treffen kann um die Verbindungsbohrung 9 bis zur der vorgesehenen Austrittstelle 11 in der Radialinnennut 12 zu treiben. Bei der Auslegung des Neigungswinkels W und der Position der Eintrittsstelle 10 der Verbindungsbohrung 9 gilt es dabei zu beachten, dass zwischen der Bohrungsachse B und der inneren Mantelfläche 13 der Aufnahmekavität 3 ein Mindestabstand A größer als ein Radius der Verbindungsbohrung 9 verbleibt, damit das Bohrwerkzeug 14 am oberen Rand der Aufnahmekavität 3 vorbei laufen kann und diesen nicht berührt.

Nach der Herstellung der Verbindungsbohrung 9 werden im Gussrohling 2' die Kolbenbohrung 7, die Radialinnennut 12, das Innenprofil der Aufnahmekavität 3 zerspant. Dabei ist es innerhalb der Erfindung zulässig und sogar wünschenswert, wenn die Fläche 6 teilweise abgetragen wird, um eine vergrößerte Einstecktiefe für den Anschlussstutzen 5 zu realisieren.

### Bezugszeichenliste

- 1: Hydraulisches Aggregat
- 2: Gehäuse
- 2': Gussrohling
- 3: Aufnahmekavität
- 4: Fluidbehälter
- 5: Anschlussstutzen
- 6: Fläche
- 7: Kolbenbohrung
- 8: Primärkolben
- 9: Verbindungsbohrung
- 10: Bohrungsende
- 11: Bohrungsende
- 12: Radialinnennut
- 13: Mantelfläche
- 14: Bohrwerkzeug
- 15: Sekundärkolben
- 16: Boden
- A: Mindestabstand
- B: Bohrungsachse
- S: Steckachse
- N: Normalenvektor
- W: Neigungswinkel

## Patentansprüche

1. Gussrohling (2') aus einer Leichtmetalllegierung zur Herstellung von einem Gehäuse (2) eines hydraulischen Aggregats (1), mit wenigstens einer Aufnahmekavität (3), welche zur Aufnahme eines mit einem Fluidbehälter (4) verbundenen Anschlussstutzens (5) vorgesehen ist, welcher entlang einer Steckachse (S) in die Aufnahmekavität (3) steckbar ist **dadurch gekennzeichnet, dass** der Gussrohling (2') in der Aufnahmekavität (3) wenigstens eine im Wesentlichen ebene Fläche (6) aufweist, welche sich von einem Boden (16) in eine Mantelfläche (13) der Aufnahmekavität (3) erstreckt und deren Normalenvektor (N) in einem schrägen Neigungswinkel (W) zu der Steckachse (S) gerichtet ist.

2. Gussrohling (2') nach Anspruch 1 **dadurch gekennzeichnet, dass** der Neigungswinkel (W) in einem Bereich zwischen 30° und 60° liegt.

3. Verfahren zur Herstellung eines Gehäuses (2) mit einer Verbindungsbohrung (9) aus dem Gussrohling (2') nach Anspruch 1 oder 2 **dadurch gekennzeichnet, dass** in der Aufnahmekavität (3) wenigstens eine innere Mantelfläche (13) bereichsweise zerspant wird, wobei vor dem Zerspanvorgang in der Aufnahmekavität (3) eine Verbindungsbohrung (9) mit einer Bohrungsachse (B) derart eingebracht wird, dass eine Eintrittsstelle (10) der Verbindungsbohrung (9) in der Fläche (6) mündet und die Bohrungsachse (B) parallel zum Normalenvektor (N) ausgerichtet ist.

4. Verfahren nach Anspruch 3 **dadurch gekennzeichnet, dass** die Fläche (6) in der Aufnahmekavität (3) nach dem Anbringen der Verbindungsbohrung (9) bereichsweise durch Zerspanung abgetragen ist.

5. Gehäuse (2) für ein Hydraulisches Aggregat (1) welches aus dem Gussrohling (2') nach Anspruch 1 oder 2 mit einem Verfahren nach wenigstens einem der Ansprüche 3 oder 4 hergestellt ist **dadurch gekennzeichnet, dass** das Gehäuse (2) wenigstens eine Kolbenbohrung (7) zur Aufnahme von wenigstens einem Primärkolben (8) umfasst und die Verbindungsbohrung (9) die Aufnahmekavität (3) mit der Kolbenbohrung (7) verbindet, wobei eine Austrittsstelle (11) der Verbindungsbohrung (9) in einer Radialinnennut (12) mündet, die in einer Mantelfläche der Kolbenbohrung (7) angeordnet ist.

6. Gehäuse (2) nach Anspruch 5 **dadurch gekennzeichnet, dass** die Bohrungsachse (B) in einem Mindestabstand (A) größer als ein Radius der Verbindungsbohrung (9) zu der inneren Mantelfläche (13) der Aufnahmekavität (3) verläuft.

7. Hydraulisches Aggregat (1) mit einem Gehäuse (2) nach wenigstens einem der Ansprüche 5 oder 6

8. Hydraulisches Aggregat (1) nach Anspruch 7 **dadurch gekennzeichnet, dass** das Aggregat (1) ein Hauptbremszylinder mit in der Kolbenbohrung (7) in Tandembauweise hintereinander angeordneten Primärkolben (8) und Sekundärkolben (15) ist.

9. Hydraulische Kraftfahrzeugbremsanlage mit einem hydraulischen Aggregat (1) nach wenigstens einem der Ansprüche 7 oder 8.

## Claims

1. Cast blank (2') made from a light metal alloy for producing a housing (2) of a hydraulic assembly (1), having at least one receiving cavity (3) which is provided for receiving a connector piece (5) which is connected to a fluid container (4) and which can be plugged along a plug-in axis (S) into the receiving cavity (3), **characterized in that** the cast blank (2') has, in the receiving cavity (3), at least one substantially planar surface (6) which extends from a base (16) into a lateral surface (13) of the receiving cavity (3) and the normal vector (N) of which is oriented at an oblique inclination angle (W) with respect to the plug-in axis (S).

2. Cast blank (2') according to Claim 1, **characterized in that** the inclination angle (W) lies in a range between 30° and 60°.

3. Method for producing a housing (2) with a connecting bore (9) from the cast blank (2') according to Claim 1 or 2, **characterized in that** in the receiving cavity (3) at least an inner lateral surface (13) is subjected to machining in regions, wherein, prior to the machining operation in the receiving cavity (3), a connecting bore (9) with a bore axis (B) is formed in such a manner that an inlet point (10) of the connecting bore (9) opens out in the surface (6), and the bore axis (B) is oriented parallel to the normal vector (N).

4. Method according to Claim 3, **characterized in that,** after provision of the connecting bore (9), the surface (6) in the receiving cavity (3) is removed at least in regions by machining.

5. Housing (2) for a hydraulic assembly (1) which is produced from the cast blank (2') according to Claim 1 or 2 by a method according to at least one of Claims 3 or 4, **characterized in that** the housing (2) comprises at least one piston bore (7) for receiving at least one primary piston (8), and the connecting bore (9) connects the receiving cavity (3) to the piston bore (7), wherein an outlet point (11) of the connecting bore (9) opens out into a radially inside groove (12) which is arranged in a lateral surface of the piston bore (7).

6. Housing (2) according to Claim 5, **characterized in that** the bore axis (B) runs with a minimum spacing (A), which is larger than a radius of the connecting bore (9), with respect to the inner lateral surface (13) of the receiving cavity (3).

7. Hydraulic assembly (1) having a housing (2) according to at least one of Claims 5 or 6.

8. Hydraulic assembly (1) according to Claim 7, **characterized in that** the assembly (1) is a master brake cylinder with primary piston (8) and secondary piston (15) arranged one behind the other in a tandem construction in the piston bore (7).

9. Hydraulic motor vehicle brake system having a hydraulic assembly (1) according to at least one of Claims 7 or 8.

## Revendications

1. Ébauche de coulée (2') en un alliage de métaux légers pour la fabrication d'un boîtier (2) d'un groupe hydraulique (1), avec au moins une cavité de réception (3), qui est prévue pour recevoir une tubulure de raccordement (5) reliée à un réservoir de fluide (4), qui peut être enfichée dans la cavité de réception (3) le long d'un axe d'enfichage (S), **caractérisée en ce que** l'ébauche de coulée (2') présente dans la cavité de réception (3) au moins une surface (6) essentiellement plane qui s'étend d'un fond (16) vers une surface d'enveloppe (13) de la cavité de réception (3) et dont le vecteur normal (N) est orienté selon un angle d'inclinaison (W) oblique par rapport à l'axe d'enfichage (S).

2. Ébauche de coulée (2') selon la revendication 1, **caractérisée en ce que** l'angle d'inclinaison (W) se situe dans une plage comprise entre 30° et 60°.

3. Procédé de fabrication d'un boîtier (2) avec un alésage de liaison (9) à partir de l'ébauche de coulée (2') selon la revendication 1 ou 2, **caractérisé en ce qu'au** moins une surface d'enveloppe intérieure (13) est usinée par zones dans la cavité de réception (3), un alésage de liaison (9) ayant un axe de trou (B) étant pratiqué dans la cavité de réception (3) avant l'opération d'usinage de telle sorte qu'un emplacement d'entrée (10) de l'alésage de liaison (9) débouche dans la surface (6) et l'axe d'alésage (B) est orienté parallèlement au vecteur normal (N).

4. Procédé selon la revendication 3, **caractérisé en ce que** la surface (6) dans la cavité de réception (3) est enlevée par zones par usinage après la réalisation de l'alésage de liaison (9).

5. Boîtier (2) pour un groupe hydraulique (1), qui est fabriqué à partir de l'ébauche de coulée (2') selon la revendication 1 ou 2 par un procédé selon au moins l'une quelconque des revendications 3 ou 4, **caractérisé en ce que** le boîtier (2) comprend au moins un alésage de piston (7) destiné à recevoir au moins un piston primaire (8) et l'alésage de liaison (9) relie la cavité de réception (3) à l'alésage de piston (7), un emplacement de sortie (11) de l'alésage de liaison (9) débouchant dans une rainure intérieure radiale (12) qui est agencée dans une surface d'enveloppe de l'alésage de piston (7).

6. Boîtier (2) selon la revendication 5, **caractérisé en ce que** l'axe d'alésage (B) s'étend à une distance minimale (A) supérieure à un rayon de l'alésage de liaison (9) par rapport à la surface enveloppe intérieure (13) de la cavité de réception (3).

7. Groupe hydraulique (1) avec un boîtier (2) selon au moins l'une quelconque des revendications 5 ou 6.

8. Groupe hydraulique (1) selon la revendication 7, **caractérisé en ce que** le groupe (1) est un maître-cylindre de frein avec des pistons primaires (8) et des pistons secondaires (15) agencés en tandem les uns derrière les autres dans l'alésage de piston (7).

9. Système de freinage hydraulique de véhicule automobile avec un groupe hydraulique (1) selon au moins l'une quelconque des revendications 7 ou 8.
